# EUROPÄISCHE PATENTSCHRIFT

(11) **EP 1 674 366 B1**
(45) Veröffentlichungstag und Bekanntmachung des Hinweises auf die Patenterteilung: **29.08.2007**
(21) Anmeldenummer: 05009377.2
(22) Anmeldetag: 28.04.2005
(51) Int. Cl.: B60T 13/08, B60T 13/68, B60T 8/24, B60T 8/32

(54) **Elektrohydraulische Bremsanlage für auflaufgebremste Kraftfahrzeuganhänger**
Electro-hydraulic braking system for automotive vehicle trailers with an over-run brake
Système de freinage électro-hydraulique pour des remorques de véhicules automobiles pourvues de freins à inertie

(30) Priorität: 23.12.2004 DE 202004019858 U
(43) Veröffentlichungstag der Anmeldung: 28.06.2006
(73) Patentinhaber: Knott GmbH, 83125 Eggstätt (DE)
(72) Erfinder: Knott, Valentin, 83254 Breitbrunn (DE); Strasser, Josef, 83254 Breitbrunn (DE)
(74) Vertreter: Bauer, Friedrich

(56) Entgegenhaltungen:
- EP-A- 0 586 203
- EP-A- 1 375 279
- DE-A1- 2 249 007
- GB-A- 2 358 897

## Beschreibung

Die Erfindung betrifft eine elektrohydraulische Bremsanlage für auflaufgebremste Kraftfahrzeuganhänger gemäß dem Oberbegriff des Anspruches 1.

Auflaufbremsanlagen für Kraftfahrzeuganhänger weisen üblicher Weise eine Auflaufeinrichtung in Form einer teleskopartig zusammenschiebbaren Anhängerdeichsel sowie einen über diese Auflaufeinrichtung mechanisch betätigbaren Hauptbremszylinder auf, der den für die Radbremsen erforderlichen Bremsdruck erzeugt, wenn der Kraftfahrzeuganhänger auf das Zugfahrzeug eine Schubkraft ausübt und dadurch die Anhängerdeichsel zusammenschiebt. Nachteilig ist bei derartigen bekannten Auflaufbremsanlagen, dass sie erst mit einer bestimmten Verzögerung ansprechen und darüber hinaus bei längerer Gefällefahrt die Gefahr besteht, dass die Bremsen heiß laufen.

Darüber hinaus sind elektrohydraulische Bremsanlagen bekannt, die über eine elektronische Steuereinrichtung verfügen, um im Fall von Schlingerbewegungen des Kraftfahrzeuganhängers die links- und rechtsseitigen Radbremsen gezielt und unabhängig voneinander abbremsen zu können und gegebenenfalls auch den Zugspanndruck an der Zugkugelkupplung zu erhöhen.

Der Erfindung liegt die Aufgabe zugrunde, eine elektrohydraulische Bremsanlage zu schaffen, die ein sehr schnelles unmittelbares Ansprechverhalten aufweist und eine hohe Ausfallsicherheit sowie umfassende Steuerungsmöglichkeiten bietet.

Diese Aufgabe wird erfindungsgemäß durch die Merkmale des Anspruchs 1 gelöst. Vorteilhafte Ausführungsformen der Erfindung sind in den weiteren Ansprüchen beschrieben.

Bei der erfindungsgemäßen Bremsanlage ist zwischen der ersten, an der Auflaufeinrichtung vorgesehenen Bremsdruckerzeugungseinrichtung und den Radbremsen eine Absperreinrichtung vorgesehen, mittels welcher die Hydraulikverbindung zwischen der ersten Bremsdruckerzeugungseinrichtung und den Radbremsen während des Fahrbetriebes blockiert ist, während eine weitere Bremsdruckerzeugungseinrichtung vorgesehen ist, die mit den Radbremsen hydraulisch verbunden ist. Weiterhin ist eine Druckerfassungseinrichtung zur Erfassung des von der ersten Bremsdruckerzeugungseinrichtung erzeugten Drucks vorgesehen. Die Steuerungseinrichtung ist derart ausgelegt, dass die Betätigung des weiteren Bremsdruckerzeugungsenrichtung in Abhängigkeit des von der Druckerfassungseinrichtung im Bereich der ersten Bremsdruckerzeugungseinrichtung gemessenen Drucks erfolgt.

Für die erfindungsgemäße Bremsanlage ist es somit charakteristisch, dass die an der Auflaufeinrichtung vorgesehene Bremsdruckerzeugungseinrichtung während des Fahrbetriebs mittels der Absperreinrichtung von den Radbremsen hydraulisch vollständig abgekoppelt wird und nur der durch diese erste Bremsdruckerzeugungseinrichtung bei Betätigen der Auflaufeinrichtung erzeugte Druck im Hydrauliksystem gemessen wird, um ein entsprechendes Drucksignal an die elektronische Steuereinrichtung zu liefern. In Abhängigkeit dieses Drucksignals gibt die elektronische Steuereinrichtung dann ein entsprechendes Steuersignal an den weiteren Bremsdruckerzeugungeinrichtung aus, der mit einem Hochdruckspeicher verbunden ist und unmittelbar und sehr schnell den notwendigen Bremsdruck in den Bremsleitungen aufbauen kann. Die weitere Bremsdruckerzeugungseinrichtung muss dabei nicht in unmittelbarer Nachbarschaft zur Auflaufeinrichtung angeordnet sein, sondern kann in einer relativ kurzen Entfernung zu den Radbremsen am Kraftfahrzeuganhänger vorgesehen sein. Auf diese Weise wird der Bremsdruck an den Radbremsen über die weitere Bremsdruckerzeugungseinrichtung auf wesentlich schnellere und direktere Weise als über die auflaufseitige Bremsdruckerzeugungseinrichtung aufgebaut, so dass sich aufgrund fehlender Zwischeriglieder und geringerer hydraulischer Dämpfungsverluste ein sehr schnelles Ansprechverhalten der Auflaufbremse ergibt.

Ein weiterer großer Vorteil ist, dass über die elektronische Steuereinheit auch andere Parameter berücksichtig werden können, beispielsweise Dauer und Stärke der laufenden Bremsvorgänge, Fahrgeschwindigkeit, die Temperatur an den Radbremsen etc. Auf diese Weise können die Radbremsen unabhängig von der Stellung der Auflaufeinrichtung wieder gelöst werden, um ein Heißlaufen der Bremsen bei langen, aber nicht allzu starken Gefällestrecken zu vermeiden, wo eine Betätigung der Radbremsen des Kraftfahrzeuganhängers eigentlich gar nicht erforderlich wäre. Weiterhin können von der elektronischen Steuereinrichtung auch Signale eines Gierratensensors berücksichtigt werden, um mittels eines gezielten Abbremsens der linken oder rechten Anhängerseite und/oder durch Verstärken des Zugspanndrucks an der Zugkugelkupplung Schlingerbewegungen zu vermeiden.

Weiterhin weist die erfindungsgemäße elektrohydraulische Bremsanlage eine hohe Ausfallsicherheit auf, da die Absperreinrichtung ohne weiteres derart ausgestaltet werden kann, dass sie die hydraulische Verbindung zwischen der ersten, an der Auflaufeinrichtung vorgesehenen Bremsdruckerzeugungseinrichtung und den Radbremsen wieder herstellt, wenn der Strom ausfällt oder ein Defekt an elektrischen oder elektronischen Komponenten auftritt.

Gemäß einer vorteilhaften Ausführungsform besteht die Absperreinrichtung aus einem elektromagnetischen Mehrwegeventil, das die Hydraulikverbindung zwischen der ersten Bremsdruckerzeugungseinrichtung und den Radbremsen im stromlosen Zustand ermöglicht und im strombeaufschlagten Zustand blockiert. Eine derartige Funktion kann beispielswiese auf einfache Weise dadurch realisiert werden, dass das Mehrwegeventil mittels Federvorspannung in seine Durchflussstellung vorgespannt ist und damit im stromlosen Zustand mechanisch in die Durchflussstellung geschalten wird.

Gemäß einer besonders vorteilhaften Ausführungsform ist zwischen dem Bremsdruckerzeugungszylinder und den Radbremsen eine weitere Druckerfassungseinrichtung vorgesehen, die mit der Steuereinrichtung verbunden ist, um die Betätigung des Bremsdruckerzeugungszylinders in Abhängigkeit eines Vergleichs zwischen dem im Bereich der ersten Bremsdruckerzeugungseinrichtung vorhandenen Druck und dem im Bereich der Radbremsen vorhandenen Druck durchzuführen. Auf diese Weise kann somit ein geschlossener Regelkreis gebildet werden, um den Ist-Bremsdruck an den Soll-Bremsdruck anzugleichen.

Die Erfindung wird nachfolgend beispielhaft anhand von Zeichnungen näher erläutert. Es zeigen:
- Figur 1:: eine schematische Darstellung der wichtigsten Komponenten der erfindungsgemäßen Bremsanlage in einer einfachen Ausführungsform, und
- Figur 2:: eine weitere Ausführungsform der erfindungsgemäßen Bremsanlage mit einem Antiblockiersystem.

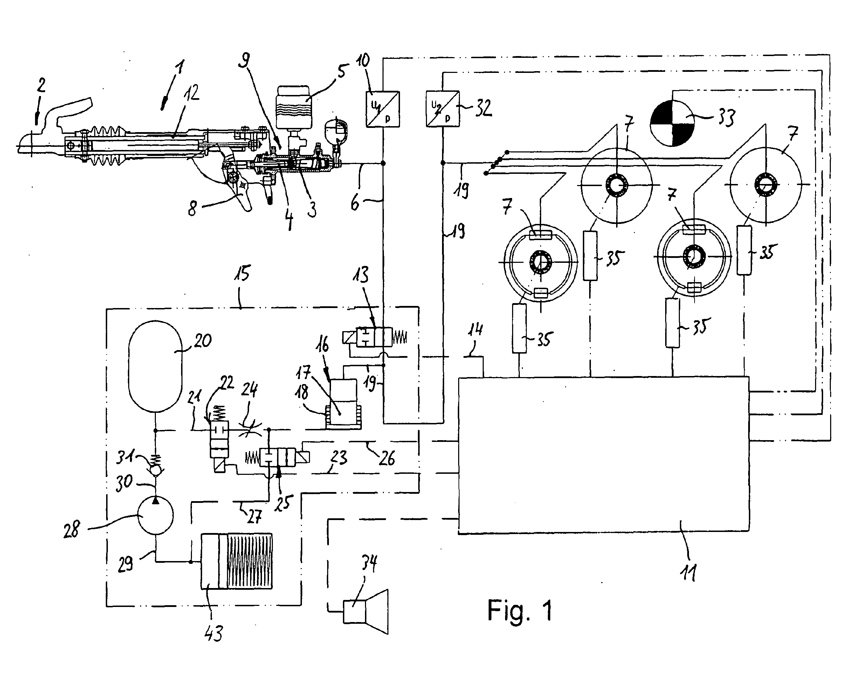

Aus Figur 1 ist eine Anhängerdeichsel 1 eines nicht näher dargestellten Kraftfahrzeuganhängers mit zwei Achsen, beispielsweise eines Tandemanhängers, ersichtlich. Die Anhängerdeichsel 1 weist an ihrem vorderen Ende eine Kugelkopfkupplung 2 auf, mit der der Anhänger an einem nicht dargestellten Kugelkopf eines Zugfahrzeugs angehängt werden kann.

Der Kraftfahrzeuganhänger verfügt über eine hydraulische Bremsanlage mit einer ersten Bremsdruckerzeugungseinrichtung 9, die einen Hauptbremszylinder 3 aufweist, in dem ein Kolben 4 derart längsverschiebbar angeordnet ist, dass er bei einer Bewegung nach hinten, d.h. in Figur 1 nach rechts, Drucköl aus einem Vorratbehälter 5 in eine Bremsleitung 6 drückt. Die Anhängerdeichsel 1 weist in bekannter Weise eine Auflaufeinrichtung 12 auf. Der Kolben 4 des Hauptbremszylinders 3 ist mittels der Auflaufeinrichtung 12 unter Zwischenschaltung eines Übersetzungshebels 8 mechanisch betätigbar. Hauptbremszylinder 3 und Kolben 4 bilden wesentliche Teile der ersten Bremsdruckerzeugungseinrichtung 9, die im hinteren Bereich der Anhängerdeichsel 1 angeordnet ist und mittels der Auflaufeinrichtung 12 mechanisch betätigt wird.

Der von der ersten Bremsdruckerzeugungseinrichtung 9 erzeugte Bremsdruck wird von einer Druckerfassungseinrichtung 10 gemessen, die an die Bremsleitung 6 angeschlossen ist und den gemessenen Druck in ein entsprechendes elektrisches Drucksignal U₁ umwandelt. Dieses Drucksignal U₁ wird einer elektronischen Steuereinrichtung 11, d.h. einem Steuerrechner zugeführt, die (der) am Kraftfahrzeuganhänger angeordnet ist.

Ist der Kraftfahrzeuganhänger an einem Zugfahrzeug angehängt, ist Strom vorhanden und befindet sich die Bremsanlage in einwandfreiem Zustand, so wird die Hydraulikverbindung zwischen der ersten Bremsdruckerzeugungseinrichtung 9 und den Radbremsen 7 mittels einer Absperreinrichtung 13 abgesperrt. Bei der Absperreinrichtung 13 handelt es sich um ein elektromagnetisches 2/2-Wegeventil, das sich in der Bremsleitung 6 befindet und im strombeaufschlagten Zustand in eine Sperrstellung geschalten wird, während es im stromlosen Zustand mittels Federvorspannung in die in Figur 1 dargestellte Durchflussstellung gedrückt wird. Die Absperreinrichtung 13 wird über die Steuereinrichtung 11 angesteuert, mit der sie über die elektrische Steuerleitung 14 verbunden ist.

Der zur Betätigung der Radbremsen 7 erforderliche Bremsdruck wird nicht von der ersten Bremsdruckerzeugungseinrichtung 9 erzeugt, sondern von einer weiteren Bremsdruckerzeugungseinrichtung 15, die in Figur 1 mit einem Strich-doppelpunktierten Rahmen umgeben ist. Kernstück dieser weiteren Bremsdruckerzeugungseinrichtung 15 ist ein Bremsdruckerzeugungszylinder 16 mit einem Kolben 17, der auch als Plungerkolben oder Modulatorkolben bezeichnet werden kann. Der Kolben 17 ist mittels Federn 18 in die untere Stellung vorgespannt. Wird der Kolben 17 in einer später noch näher beschriebenen Weise nach oben bewegt, so wird die sich oberhalb des Kolbens 17 befindende Bremsflüssigkeit aus dem Bremsdruckerzeugungszylinder 16 hinausgedrückt und dadurch der Bremsdruck in einer Bremsleitung 19, die direkt zu den Radbremsen 7 führt, entsprechend erhöht.

Der Bremsdruckerzeugungszylinder 16 wird durch Drucköl aus einem Hochdruckspeicher 20 bewegt, der über eine Leitung 21 mit der Rückseite des Bremsdruckerzeugungszylinders 16 verbunden ist. In der Leitung 21 befindet sich ein elektromagnetisches Mehrwegeventil 22 in Form eines 2/2-Wegeventils, das in seiner federbelasteten, stromlosen Grundstellung den Durchfluss durch die Leitung 21 sperrt und in seiner strombeaufschlagten Stellung den Durchfluss durch die Leitung 21 freigibt. Das Mehrwegeventil 22 ist über eine elektrische Steuerleitung 23 mit der Steuereinrichtung 11 verbunden und wird von dieser entsprechend angesteuert. Zwischen dem Mehrwegeventil 22 und dem Bremsdruckerzeugungszylinder 16 befindet sich weiterhin ein einstellbares Drosselventil 24 zur Einstellung des Hydraulikdrucks in der Leitung 21.

Zum Betätigen der Radbremsen 7 wird das Mehrwegeventil 22 von der Steuereinrichtung 11 solange in seine Durchflussstellung geschalten, bis das Drucköl aus dem Hochdruckspeicher 20 den Kolben 17 des Druckerzeugungszylinders 16 in entsprechender Weise aktiviert, d.h. nach vorne geschoben hat, wodurch der Bremsdruck in der Bremsleitung 19 entsprechend erhöht wird. Soll dagegen die Bremswirkung in den Radbremsen 7 wieder aufgehoben werden, so wird das Mehrwegeventil 22 von der Steuereinrichtung stromlos geschaltet, d.h. es wird durch die Vorspannkraft der Feder in seine Sperrstellung zurückgedrückt. Gleichzeitig wird ein Mehrwegeventil 25 in Form eines elektromagnetischen 2/2-Wegeventils auf Durchfluss geschalten, das über eine elektrische Steuerleitung 26 mit der Steuereinrichtung 11 verbunden ist. Das Mehrwegeventil 25 sitzt in einer Zweigleitung 27, die zwischen dem Drosselventil 24 und dem Bremsdruckerzeugungszylinder 16 von der Leitung 21 abzweigt und zu einem hydraulischen Niederdruckspeicher 43 führt. Der Niederdruckspeicher 43 dient dem Ausgleich von Druckschwankungen im Leitungssystem. Da das Mehrwegeventil 25 dann, wenn der Bremsvorgang aufgehoben werden soll, in seine Durchflussstellung geschaltet ist, kann sich der Kolben 17 des Bremsdruckerzeugungszylinders 16 wieder zurückbewegen, wodurch die Bremsflüssigkeit in den Niederdruckspeicher 43 abgeleitet wird. Bei einem Bremsvorgang befindet sich das Mehrwegeventil 25 in der federbelasteten, stromlosen Sperrstellung, die in Figur 1 eingezeichnet ist, so dass das Drucköl aus dem Hochdruckspeicher 20, das beispielsweise bei einem Druck von etwa 120 bis 180 bar vorliegen kann, ausschließlich dem Bremsdruckerzeugungszylinder 16 zugeführt wird und nicht über die Zweigleitung 27 abfließen kann.

Der Hochdruckspeicher 20 wird über eine Hochdruckpumpe 28 befüllt, die über eine Leitung 29 einerseits mit dem Niederdruckspeicher 43 und andererseits über eine Leitung 30 mit dem Hochdruckspeicher 20 in Verbindung ist. In der Leitung 30 befindet sich ein Rückschlagventil 31.

Wie bereits erwähnt, ist im fahrbereiten Zustand des Kraftfahrzeuganhängers die mit der Auflaufeinrichtung 12 direkt zusammenwirkende Bremsdruckerzeugungseinrichtung 9 mittels der Absperreinrichtung 13 hydraulisch von den Radbremsen 7 abgekoppelt, so dass der dort erzeugt Bremsdruck lediglich als Druckwertgeber für die elektronische Steuereinrichtung 11 dient. Die hydraulische Abkopplung der Bremsdruckerzeugungseinrichtung 9 erfolgt auf einfache Weise dadurch, dass die Bremsleitung 6, in der sich die Absperreinrichtung 13 befindet, erst hinter der Absperreinrichtung 13 in die Bremsleitung 19 an einer Stelle mündet, die zwischen dem Bremsdruckerzeugungszylinder 16 und den Radbremsen 7 liegt. Hierdurch kann auch auf einfache Weise eine hohe Ausfallsicherheit des Gesamtsystems realisiert werden, da bei einem Stromausfall die Absperreinrichtung 13 einfach in ihre federbelastete, stromlose Durchgangsstellung zurückfällt, die in Figur 1 eingezeichnet ist, und hierdurch die erste Bremsdruckerzeugungseinrichtung 9 wieder mit den Radbremsen 7 hydraulisch verbunden ist. Bei Ausfall der Stromversorgung bleibt auch der Kolben 17 des Bremsdruckerzeugungszylinders 16 in seiner zuletzt eingenommenen Stellung, da auch die Mehrwegeventile 22, 25 durch Federvorspannkraft in ihre stromlose Sperrstellung zurückgedrückt werden, so dass kein weiterer Zu- oder Abfluss durch die Leitungen 21 oder 27 erfolgen kann. Das System bietet auf diese Weise ein hohes Maß an Ausfallsicherheit.

Um den Hydraulikdruck in der Bremsleitung 6 exakt regeln zu können, ist in der Bremsleitung 19 unmittelbar vor den Radbremsen 7 eine weitere Druckerfassungseinrichtung 32 vorgesehen, welche den gemessenen Druck in ein entsprechendes elektrisches Drucksignal U₂ umwandelt. Der Ausgang der Druckerfassungseinrichtung 32 ist mit der elektronischen Steuereinrichtung 11 verbunden, welche das Drucksignal U₂ mit dem auflaufseitigen Drucksignal U₁ vergleicht und die weitere Bremsdruckerzeugungseinrichtung 15 derart ansteuert, dass auch unmittelbar vor den Radbremsen 7 der gewünschte Solldruck vorliegt.

Aufgrund der elektronischen Steuereinrichtung 11 ist es auch möglich, weitere Signale, beispielsweise Signale eines Gierratensensors 33, durch welche Schlingerbewegungen des Kraftfahrzeuganhängers angezeigt werden, zu verarbeiten und mittels der Bremsdruckerzeugungseinrichtung 15 die Radbremsen 7 derart abzubremsen, dass das Gespann gestreckt und dadurch Schlingerbewegungen entgegengewirkt wird. Weiterhin kann die Bremsanlage auch ohne weiteres derart ausgeführt werden, dass weitere Maßnahmen, beispielsweise eine Veränderung des Zugspanndrucks an der Zugkugelkupplung bewerkstelligt werden. Die Steuereinrichtung 11 kann auch mit einer akustischen Warneinrichtung 34 oder einer nicht dargestellten optischen Warneinrichtung verbunden sein, die zweckmäßiger Weise im Inneren des Fahrgastraums des Zugfahrzeugs angeordnet sind.

Weiterhin ist es auch ohne weiteres möglich, zwei voneinander getrennte Bremsdruckerzeugungseinrichtungen 15 vorzusehen, wobei eine Bremsdruckerzeugungseinrichtung 15 mit den linken Radbremsen 7 und die andere Bremsdruckerzeugungseinrichtung 15 mit den rechten Radbremsen 7 verbunden ist. Auf diese Weise können die linken und die rechten Radbremsen unabhängig voneinander abgebremst werden, um Schlingerbewegungen des Kraftfahrzeuganhängers zu unterbinden.

Weiterhin sind aus Figur 1 noch Radsensoren 35 ersichtlich, welche die Umdrehungsgeschwindigkeit der Räder messen, um entsprechende Geschwindigkeitssignale der elektronischen Steuereinrichtung 11 zuzuführen, um die Bremsbetätigung auch in Abhängigkeit von der Fahrgeschwindigkeit vornehmen zu können.

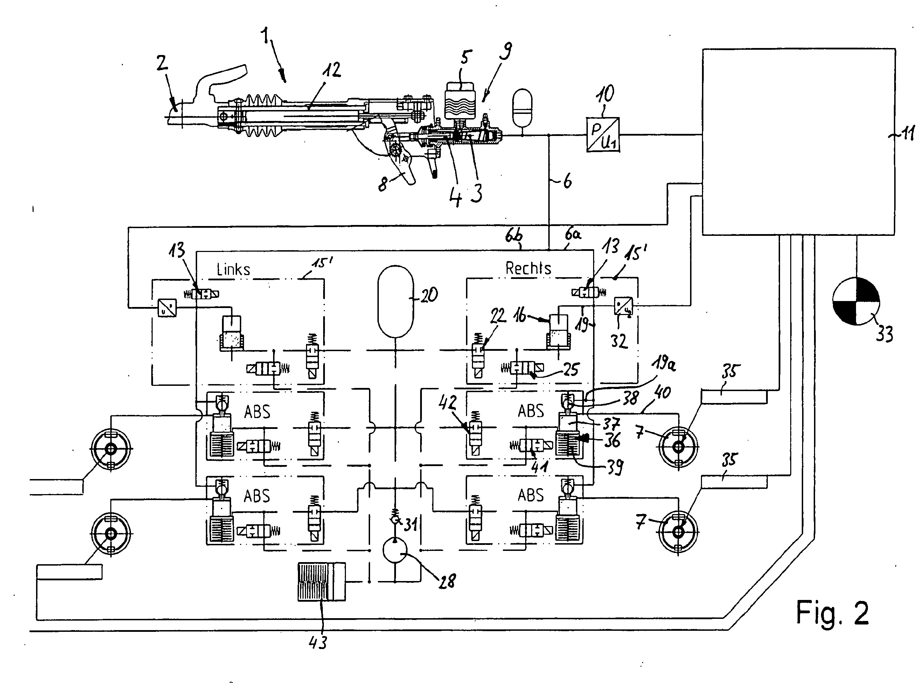

Eine weitere Ausführungsform der erfindungsgemäßen Bremsanlage mit zwei Bremsdruckerzeugungseinrichtungen 15' zur getrennten Bremsbetätigung der linken und rechten Radbremsen sowie mit einem zusätzlichen Antiblockiersystem (ABS) ist in Figur 2 dargestellt. Die im Bereich der Anhängerdeichsel 1 vorgesehene erste Bremsdruckerzeugungseinrichtung 9 ist hierbei prinzipiell gleich zu derjenigen der ersten Ausführungsform ausgebildet, so dass diesbezüglich hierauf verwiesen wird. Teile der zweiten Ausführungsform, die denjenigen der ersten Ausführungsform entsprechen, sind hierbei mit gleichen Bezugszeichen versehen.

Wie aus Figur 2 ersichtlich, verzweigt die Bremsleitung 6 in eine rechte Bremsleitung 6a und eine linke Bremsleitung 6b, in denen sich jeweils eine Absperreinrichtung 13 befindet. Da das Hydrauliksystem bzgl. der linken und rechten Anhängerseite symmetrisch aufgebaut ist, wird im Folgenden der Aufbau und die Funktion der Bremsanlage nur in Bezug auf die rechte Anhängerseite näher erläutert. Aufgrund der symmetrischen Anordnung gelten diese Ausführungen in gleicher Weise auch für die linke Anhängerseite.

Das auf die rechten Radbremsen 7 einwirkende Bremssystem weist eine Bremsdruckerzeugungseinrichtung 15' auf, die wie im Fall der ersten Ausführungsform einen Bremsdruckerzeugungszylinder 16, ein Mehrwegeventil 22 und ein Mehrwegeventil 25 umfasst. Anordnung und Funktion dieser Komponenten sind identisch zu den entsprechenden Komponenten der ersten Ausführungsform. Weiterhin ist auch ein Hochdruckspeicher 20, eine Hochdruckpumpe 28, ein dazwischen geschaltetes Rückschlagventil 31 sowie ein Niederdruckspeicher 43 vorhanden, welche exakt den entsprechenden Komponenten der ersten Ausführungsform entsprechen. Die zuletzt genannten Komponenten 20, 28, 31, 43 sind jedoch nicht nur mit dem rechtsseitigen Bremssystem gekoppelt, sondern werden gleichzeitig auch für das linksseitige Bremssystem in entsprechender Weise verwendet.

Der vom Bremsdruckerzeugungszylinder 16 erzeugte Bremsdruck wird wiederum in gleicher Weise wie bei der ersten Ausführungsform von einer Druckerfassungseinrichtung 32 gemessen, die ein entsprechendes Drucksignal an die Steuereinrichtung 11 abgibt, so dass der vom Bremsdruckerzeugungszylinder 16 erzeugt Bremsdruck mit dem Drucksignal 41 verglichen werden kann, welches die auflaufseitige Druckerfassungseinrichtung 10 abgibt.

Im Folgenden wird das Antiblockiersystem näher erläutert.

Das Antiblockiersystem weist für jede Radbremse 7 einen ABS-Zylinder 36 mit einem darin verschiebbar angeordneten ABS-Kolben 37 auf, um ein Sperrventil 38 in Form eines Kugelrückschlagventils zu betätigen. Die Bremsleitung 19 mündet mit einem Teilabschnitt 19a derart in dem Gehäuse des Sperrventils 38, dass das vom Bremsdruckerzeugungszylinder 16 zu den Radbremsen 7 gepumpte Öl versucht, das Sperrventil 38 zu schließen. In diese Schließrichtung ist das Sperrventil 38 zusätzlich mittels einer Feder vorgespannt. Der unterhalb des Sperrventils 38 angeordnete ABS-Kolben 37 weist jedoch an seiner Oberseite einen Stößel auf, der die Kugel des Sperrventils nach oben drückt und dadurch das Sperrventil 38 öffnet, wenn sich der ABS-Kolben 37 in der dargestellten oberen Position innerhalb des ABS-Zylinders 36 befindet. In diese obere Position ist der ABS-Kolben 37 mittels einer Feder 39 vorgespannt.

In der oberen Stellung des ABS-Kolbens 37 ist zwischen der Oberseite des ABS-Kolbens 37 und der oberen Stirnwand des ABS-Zylinders 36 noch ein Zwischenraum vorhanden, der als ABS-Zusatzdruckölspeicher wirkt und in den ein Bremsleitungsabschnitt 40 mündet. Der Bremsleitungsabschnitt 40 führt direkt zur zugehörigen Radbremse 7. Weiterhin ist der Zusatzdruckölspeicher des ABS-Zylinders 36 mit dem Gehäuse des Sperrventils 38 in Fluidverbindung, so dass dann, wenn sich der ABS-Kolben 37 in der oberen Stellung befindet und die Kugel des Sperrventils 38 nach oben drückt, eine durchgehende Fluidverbindung in beiden Richtungen zwischen dem Bremsdruckerzeugungszylinder 16 und den Radbremsen 7 vorhanden ist. In dieser Stellung, die in Figur 2 gezeigt ist, kann somit im Bremsfall das Drucköl vom Bremsdruckerzeugungszylinder 16 durch das Gehäuse des Sperrventils 38 und den Zusatzdruckölspeicher innerhalb des ABS-Zylinders 36 hindurch zu den Radbremsen 7 gepumpt werden, um diese hydraulisch zu betätigen.

Jedes Rad weist wiederum einen Radsensor 35 auf, um die Winkelgeschwindigkeit des Rads und damit auch ein Blockieren desselben erfassen zu können. Die Radsensoren 35 stehen mit der elektronischen Steuereinrichtung 11 in Verbindung. Im Fall des Blockierens eines Rads veranlasst die elektronische Steuereinrichtung 11, dass der ABS-Kolben 37 entgegen der Vorspannkraft der Feder 39 nach unten verfahren wird. Da hierdurch auch der Stößel des Sperrventils 38 nach unten fährt und dadurch die Kugel des Sperrventils 38 auf dem entsprechenden Ventilsitz aufsitzen kann, wird die Zufuhr weiteren Drucköls aus dem Bremsdruckerzeugungszylinder 16 zu den Radbremsen 7 unterbunden. Gleichzeitig vergrößert sich durch das Absenken des ABS-Kolbens 37 der Zusatzdruckölspeicher des ABS-Zylinders 36. Dies hat zur Folge, dass eine Saugwirkung auf den Bremsleitungsabschnitt 40 ausgeübt wird, wodurch Drucköl aus den Radbremsen 7 abgezogen wird, so dass die Radbremsen 7 schlagartig entlastet werden.

Sobald die Radsensoren 35 an die elektronische Steuereinrichtung 11 ein Signal abgeben, dass sich das blockierte Rad wieder dreht, veranlasst die elektronische Steuereinrichtung 11, dass der ABS-Kolben 37 wieder nach oben gefahren wird, wodurch das Sperrventil 38 geöffnet und das Drucköl aus dem Zusatzdruckölspeicher in den Bremsleitungsabschnitt 40 zurückgepumpt wird. Hierdurch erhöht sich wieder der Bremsdruck innerhalb des Bremsleitungs-abschnittes 40 und damit innerhalb der Radbremse 7, so dass wieder eine Bremsung stattfindet.

Die Betätigung des ABS-Kolbens 37 erfolgt über zwei elektromagnetisch betätigbare Steuerventile 41, 42 in Form von 2/2-Wegeventilen, die mit der elektronischen Steuereinrichtung 11 in elektrischer Verbindung stehen. Das Steuerventil 41 befindet sich an einer Leitung, die vom ABS-Zylinder 36 zum Niederdruckspeicher 43 führt. Das Steuerventil 42 befindet sich dagegen in einer Leitung, die vom ABS-Zylinder 36 zum Hochdruckspeicher 20 führt. In der in Figur 2 dargestellten Stellung befindet sich das Steuerventil 42 in einer Schaltstellung, in der der Durchfluss unterbunden ist. Aus dem Hochdruckspeicher 20 kann somit kein Drucköl in den ABS-Zylinder 36 gepumpt werden. Der ABS-Kolben 37 bleibt durch die Vorspannkraft der Feder 39 in der gezeigten oberen, das Sperrventil 38 offenhaltenden Stellung, in der die Radbremsen 7 normal betätigt werden können.

Erkennt die elektronische Steuereinrichtung dagegen ein Blockieren eines Rades, das die Aktivierung des Antiblockiersystems erfordert, wird das Steuerventil 41 von einer Durchflussstellung in eine Sperrstellung und das Steuerventil 42 in seine Durchflussstellung verfahren. In diesem Zustand kann Drucköl mit hohem Druck aus dem Hochdruckspeicher 20 derart in den ABS-Zylinder 36 eingeführt werden, dass der ABS-Kolben 37 nach unten gedrückt wird, wodurch - wie vorstehend erläutert - die Bremswirkung der Radbremse 7 und damit das Blockieren des Rades wieder aufgehoben wird.

Wie ersichtlich, ist jeder Radbremse 7 ein eigenes ABS-System zugeordnet. Jedes dieses ABS-Systeme verfügt somit über entsprechende Sperrventile 38, ABS-Zylinder 36 und Steuerventile 41, 42.

Wie bereits erwähnt, ist auch bei der in Figur 2 gezeigten Ausführungsform im fahrbereiten Zustand des Anhängers die auflaufseitige Bremsdruckerzeugungseinrichtung 9 hydraulisch von den Radbremsen 7 mittels der Absperreinrichtungen 13 getrennt, so dass die Betätigung der Radbremsen 7 allein durch die Bremsdruckerzeugungseinrichtungen 15' (gegebenenfalls unter Mitwirkung der ABS-Zylinder 36) erfolgt. Kommt es dagegen zu einem Ausfall der Bremsdruckerzeugungseinrichtungen 15, bewegt sich auch hier wiederum die Absperreinrichtung 13 durch Federvorspannung in die eingezeichnete Durchflussstellung, wodurch derf Durchfluss von den Bremsleitungen 6a, 6b zu den Bremsleitungen 19 freigegeben wird und die Betätigung der Radbremsen 7 direkt über die auflaufseitige Bremsdruckerzeugungseinrichtung 9 erfolgen kann. Bei Stromausfall bewegen sich dabei auch die ABS-Kolben 37 nach oben in die dargestellte Ausgangslage und öffnen dadurch die Verbindung zwischen den Radbremsen 7 und der übrigen Bremsanlage. Die Radbremsen 7 lassen sich dadurch wieder frei über die auflaufseitige Bremsdruckerzeugungseinrichtung 9 betätigen.

Da im fahrbereiten Zustand die auflaufseitige Bremsdruckerzeugungseinrichtung 9 nur noch dafür verwendet wird, den dort erzeugten Druck zu messen und als Signal an die elektronische Steuereinrichtung 11 abzugeben, kann das Ansprechverhalten der Bremsanlage wesentlich beschleunigt werden. Weiterhin kann das Bremsverhalten präziser an die Erfordernisse (lange Gefällefahrt, Blockierneigung, Schlingerneigung) angepasst werden. Darüber hinaus können Signale aus dem Zugfahrzeug ausgewertet werden, wodurch die Auflaufbremsanlage zu einer durchgehenden Bremsanlage erweitert wird. Diese kann derart gesteuert werden, dass die Radbremsen bei einer Gefällefahrt nur noch betätigt werden, wenn auch die Betriebsbremse des Zugfahrzeuges betätigt wird, wodurch ein Heißlaufen der Radbremsen verhindert werden kann. Weiterhin kann die erfindungsgemäße Bremsanlage den Kraftfahrzeuganhänger bei einer Schlingerbewegung durch sanftes und gezieltes Zuspannen der Radbremsen anbremsen und so das Gespann strecken und dann stabilisieren.

## Patentansprüche

1. Elektrohydraulische Bremsanlage für auflaufgebremste Kraftfahrzeuganhänger, die eine Anhängerdeichsel (1) mit einer Auflaufeinrichtung (12) aufweisen,
mit einer ersten, mittels der Auflaufeinrichtung (12) mechanisch betätigbaren Bremsdruckerzeugungseinrichtung (9),
mit mindestens einer weiteren Bremsdruckerzeugungseinrichtung (15, 15'), die einen Bremsdruckerzeugungszylinder (16), einen mit dem Bremsdruckerzeugungszylinder (16) wirkungsmäßig verbundenen Hochdruckspeicher (20) sowie eine Hochdruckpumpe (28) zum Befüllen des Hochdruckspeichers (20) aufweist, und
mit einer elektronischen Steuereinrichtung (11), die mit der weiteren Bremsdruckerzeugungseinrichtung (15, 15') verbunden ist,
**dadurch gekennzeichnet, dass**
- zwischen der ersten Bremsdruckerzeugungseinrichtung (9) und den Radbremsen (7) eine Absperreinrichtung (13) vorgesehenen ist, mittels welcher die Hydraulikverbindung zwischen der ersten Bremsdruckerzeugungseinrichtung (9) und den Radbremsen (7) während des Fahrbetriebs blockiert ist, während die weitere Bremsdruckerzeugungseinrichtung (15, 15') mit den Radbremsen (7) hydraulisch verbunden ist,
- eine Druckerfassungseinrichtung (10) zur Erfassung des von der ersten Bremsdruckerzeugungseinrichtung (9) erzeugten Drucks vorgesehen ist, und
- die Steuereinrichtung (11) derart ausgelegt ist, dass die Betätigung der weiteren Bremsdruckerzeugungseinrichtung (15, 15') in Abhängigkeit des von der Druckerfassungseinrichtung (10) im Bereich der ersten Bremsdruckerzeugungseinrichtung (9) gemessenen Drucks erfolgt.

2. Bremsanlage nach Anspruch 1, **dadurch gekennzeichnet, dass** die Absperreinrichtung (13) aus einem elektromagnetischen Mehrwegeventil (22) besteht, das die Hydraulikverbindung zwischen der ersten Bremsdruckerzeugungseinrichtung (9) und den Radbremsen (7) im stromlosen Zustand ermöglicht und im strombeaufschlagten Zustand blockiert.

3. Bremsanlage nach einem der Ansprüche 1 oder 2, **dadurchgekennzeichnet, dass** zwischen dem Bremsdruckerzeugungszylinder (16) und den Radbremsen (7) eine weitere Druckerfassungseinrichtung (32) vorgesehen ist, die mit der Steuereinrichtung (11) verbunden ist, um die Betätigung des Bremsdruckerzeugungszylinders (16) in Abhängigkeit eines Vergleichs zwischen dem im Bereich der ersten Bremsdruckerzeugungseinrichtung (9) vorhandenen Druck und dem im Bereich der Radbremsen (7) vorhandenen Druck durchzuführen.

## Claims

1. Electro-hydraulic braking system for vehicle trailers with an overrun brake, which comprises a trailer draw bar (1) having an overrun device (12), with a first brake pressure generator (9), capable of being mechanically operated by means of the overrun device (12), with at least one second brake pressure generator (15, 15'), which comprises a brake pressure cylinder (16), a high-pressure storage device (20) connected to the brake pressure cylinder (16) as well as a high-pressure pump (28) for filling up the high-pressure storage device (20), and with an electronic control unit (11), which is connected to the second brake pressure generator (15, 15'),
**characterized in that**
- an isolation device (13) is fitted between the first brake pressure generator (9) and the wheel brakes (7), by which means the hydraulic connection between the first brake pressure generator (9) and the wheel brakes (7) is blocked during driving, while the second brake pressure generator (15, 15') is hydraulically connected to the wheel brakes (7),
- a pressure-sensor (10) is provided for detecting the pressure produced by the first brake pressure generator (9), and
- the control unit (11) works in such a way that the operation of the second brake pressure generator (15, 15') is actuated as a function of the pressure measured by the pressure-sensor (10) in the region of the first brake pressure generator (9).

2. Braking system according to Claim 1, **characterized in that** the isolation device (13) consists of an electromagnetic multi-way valve (22), which restores the hydraulic connection between the first brake pressure generator (9) and the wheel brakes (7) in the de-energized condition and blocks this in the energized condition.

3. Braking system according to either of Claims 1 or 2, **characterized in that** a further pressure-sensor (32), provided between the brake pressure cylinder (16) and the wheel brakes (7), is connected to the control unit (11) in order to operate the brake pressure cylinder (16) as a function of a comparison between the pressure existing in the region of the first brake pressure generator (9) and the pressure existing in the region of the wheel brakes (7).

## Revendications

1. Installation de freinage électrohydraulique pour remorque de véhicule à freinage par inertie, qui comprend un timon de remorque (1) avec un système à inertie (12),
comprenant un premier dispositif de génération de pression de freinage (9), susceptible d'être actionné mécaniquement au moyen du système à inertie (12),
comprenant au moins un autre dispositif de génération de pression de freinage (15, 15'), qui comporte un cylindre de génération de pression de freinage (16), un accumulateur à haute pression (20) relié activement au cylindre générateur de pression de freinage (16), ainsi qu'une pompe à haute pression (28) pour remplir l'accumulateur à haute pression (20), et
comprenant un dispositif de commande électronique (11), qui est relié à l'autre dispositif de génération de pression de freinage (15, 15'),
**caractérisée en ce que** :
- entre le premier dispositif de génération de pression de freinage (9) et les freins de roue (7) est prévu un dispositif d'isolement (13) au moyen duquel la liaison hydraulique entre le premier dispositif de génération de pression de freinage (9) et les freins de roue (7) est bloquée pendant la circulation, alors que l'autre dispositif de génération de pression de freinage (15, 15') est relié sur le plan hydraulique avec les freins de roue (7),
- il est prévu un dispositif de détection de pression (10) pour détecter la pression générée par le premier dispositif de générateur de pression de freinage (9), et
- le dispositif de commande (11) est conçu de telle façon que l'actionnement de l'autre dispositif de génération de pression de freinage (15, 15') a lieu en dépendance de la pression mesurée par le dispositif de détection de pression (10) dans la région du premier dispositif de génération de pression de freinage (9).

2. Installation de freinage selon la revendication 1, **caractérisée en ce que** le dispositif d'isolement (13) est composé d'une soupape de distribution électromagnétique (22) qui permet la liaison hydraulique entre le premier dispositif de génération de pression de freinage (9) et les freins de roue (7) à l'état sans courant, et qui bloque ladite liaison à l'état excité.

3. Installation de freinage selon la revendication 1 ou 2, **caractérisée en ce que**, entre le cylindre de génération de pression de freinage (16) et les freins de roue (7), il est prévu un autre dispositif de détection de pression (32) qui est relié au dispositif de commande (11), pour exécuter l'actionnement du cylindre de génération de pression de freinage (16) en dépendance d'une comparaison entre la pression qui règne dans la région du premier dispositif de génération de pression de freinage (9) et la pression qui règne dans la région des freins de roue (7).
